# EUROPEAN PATENT APPLICATION

(11) **EP 0 687 036 A2**
(43) Date of publication of application: **13.12.1995**
(21) Application number: 95108851.7
(22) Date of filing: 08.06.1995
(51) Int. Cl.: H01R 13/633

(54) **Electrical connector with ejection mechanism**

(30) Priority: 10.06.1994 US 258462
(71) Applicant: FRAMATOME CONNECTORS INTERNATIONAL, 92400 Courbevoie, Paris (FR)
(72) Inventor: Fitting, Paul E., Camp Hill, Pennsylvania 17011 (US)
(74) Representative: Patentanwälte Beetz - Timpe - Siegfried Schmitt-Fumian - Mayr

(57) **Abstract**

An electrical connector (10) for removably receiving an electronic module. The connector has a frame, electrical contacts (14), and an ejection mechanism (16) for ejecting the electronic module from the connector (10). The ejection mechanism has two longitudinally slidable members connected orthogonally to each other. When a first one of the members is moved by a user in a first direction, the second one of the members is wedged by the first member in a second direction orthogonal to the first direction. The frame has cam surfaces that interact with the second member to move the second member in a third direction, opposite to the first direction, when the second member is moved in the second direction. The second member pushes the electronic module out of the connector as it is moved in the third direction.

## Description

### BACKGROUND OF THE INVENTION

### 1. Field of the Invention

The present invention relates to electrical connectors and, more particularly, to a connector with an ejection mechanism.

### 2. Prior Art

U.S. Patents 5,275,573; 5,152,697; 5,139,435; 5,026,296; EPO patent publications 0547255, 0532346, 0385750; and U.K. patent publication 2205000 all disclose various types of electrical connector for receiving electronic modules with ejection mechanisms for ejecting the modules from the connectors. U.S. Patents 4,902,240; 4,875,873; 4,586,771; and 5,230,635 all disclose electrical connectors with cam mechanisms. U.S. Patents 5,238,423; 4,223,973; 3,869,185 and 4,789,352 disclose various systems for modularly connecting circuit boards to each other.

### SUMMARY OF THE INVENTION

In accordance with one embodiment of the present invention an electrical connector for an electronic module is provided comprising a header, and a module ejector. the header has a housing and electrical contacts. The module ejector is mounted to the housing and has a first longitudinally slidable control member and a second longitudinally slidable ejector member. The first and second members are wedgingly connected to each other in a general orthogonal fashion. Longitudinal movement of the first member in a first direction longitudinally moves the second member in a second direction orthogonal to the first direction.

In accordance with another embodiment of the present invention an electrical connector for an electronic module is provided comprising a header, an ejector mechanism, and a first cam surface. The header has a frame and electrical contacts. The ejector mechanism is mounted to the frame and has a longitudinally slidable ejector member having a contact surface for contacting and pushing on the electronic module inserted into the header. The first cam surface contacts the ejector member. The first cam surface and ejector member are suitably shaped such that, upon longitudinal movement of the ejector member in a first direction, the first cam surface moves the entire ejector member in a second direction orthogonal to the first direction.

In accordance with another embodiment of the present invention, an electrical connector with an ejection system for removably receiving an electronic module is provided comprising a frame, electrical contacts, and an ejector mechanism. The frame has two spaced side arms for slidingly receiving an electronic module therebetween. Exteriors of both of the side arms have dovetail mounting recesses. The electrical contacts are mounted to the frame. The ejector mechanism is connected to the frame and has an ejector housing mounted to the frame along one of the side arms. The ejector housing has dovetail projections located in the dovetail recesses of the frame.

In accordance with one method of the present invention a method of ejecting an electronic module from an electrical connector comprises steps of pushing a first control member of an ejector mechanism of the connector in a first longitudinal direction; moving a second ejecting member of the ejector mechanism in a second direction orthogonal to the first direction due to contact of the first member with the second member; and moving the second member in a third direction, reverse to the first direction, as the second member is moved in the second direction.

In accordance with another method of the present invention a method of ejecting a PCMCIA electronic module from a PCMCIA electrical connector is provided comprising steps of moving an ejecting member from a first position to a second position, the ejecting member having a contact surface for contacting and pushing the PCMCIA electronic module from the PCMCIA electrical connector as the ejecting member is moved from the first position to the second position; and varying the amount of ejection force exerted by the ejecting member on the PCMCIA electronic module as the ejecting member is moved from the first position to the second position.

### BRIEF DESCRIPTION OF THE DRAWINGS

The foregoing aspects and other features of the invention are explained in the following description, taken in connection with the accompanying drawings, wherein:
Fig. 1 is an exploded perspective view of an electrical connector incorporating features of the present invention;
Fig. 2 is an elevational side view of the electrical connector shown in Fig. 1 with a partial cross sectional view of a header section of the connector;
Fig. 3A is a top view of the electrical connector shown in Fig. 1 with its ejector mechanism at a first position and showing a portion of the connector in cross section;
Fig. 3B is a top view of the connector shown in Fig. 3A with the ejector mechanism moved to a second position;
Fig. 4 is an enlarged cross sectional view of a portion of the frame of the connector shown in Fig. 1 showing a cam surface;
Fig. 5 is a plan top view of a header of an alternate embodiment of the invention;
Fig. 6A is a sectional view of an ejector subassembly for use with the header shown in Fig. 5;
Fig. 6B is an elevational side view of the rear end of the ejector subassembly shown in Fig. 6A;
Fig. 6C is an elevation front view of the ejector subassembly shown in Figs. 6A and 6B;
Fig. 7 is a plan top view of one side of the rear end of the assembled header and ejector subassembly shown in Fig. 5 and Figs. 6A-6C;
Fig. 7A is a cross-sectional view of assembly shown in Fig. 7 taken along line 7A-7A;
Fig. 8A is a partial cross-sectional view of two movable members of an alternate embodiment of the ejector subassembly shown in Fig. 6A at a first relative position;
Fig. 8B is a partial cross-sectional view as in Fig. 8A with the two members shown at a second relative position; and
Fig. 9 is a partial front elevation view of the assembled header and ejector subassembly shown in Fig. 5 and Figs. 6A-7A mounted on a printed circuit board that is shown in cross-section.

### DETAILED DESCRIPTION OF THE INVENTION

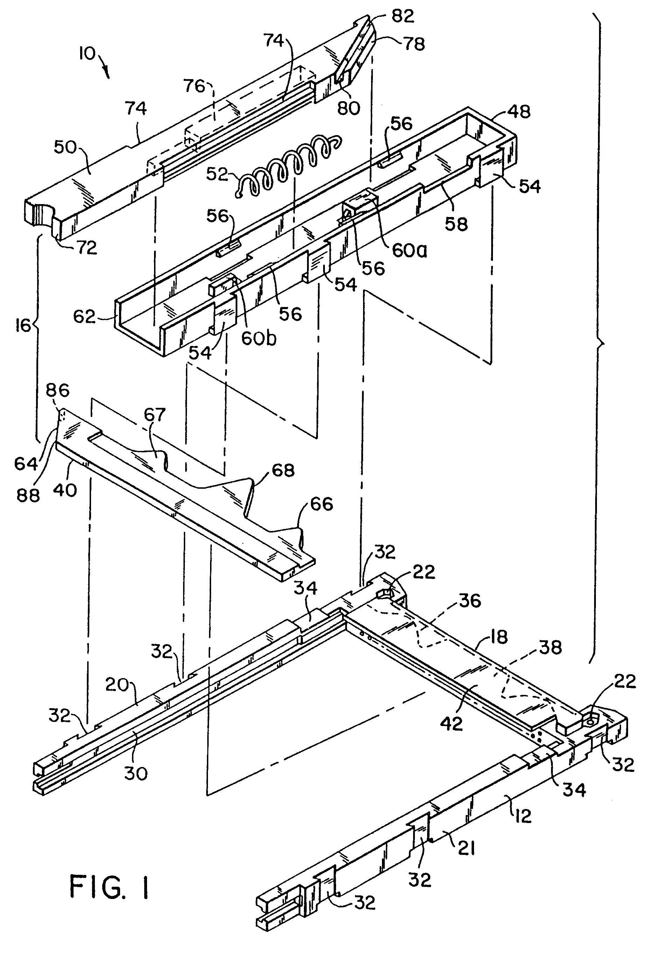

Referring to Figs. 1 through 4, there is shown an electrical connector 10 incorporating features of the present invention. Although the present invention will be described with reference to the single embodiment shown in the drawings, it should be understood that the present invention may be embodied in many different types and forms of alternate forms of embodiment. In addition, any suitable size, shape or type of members or materials could be used.

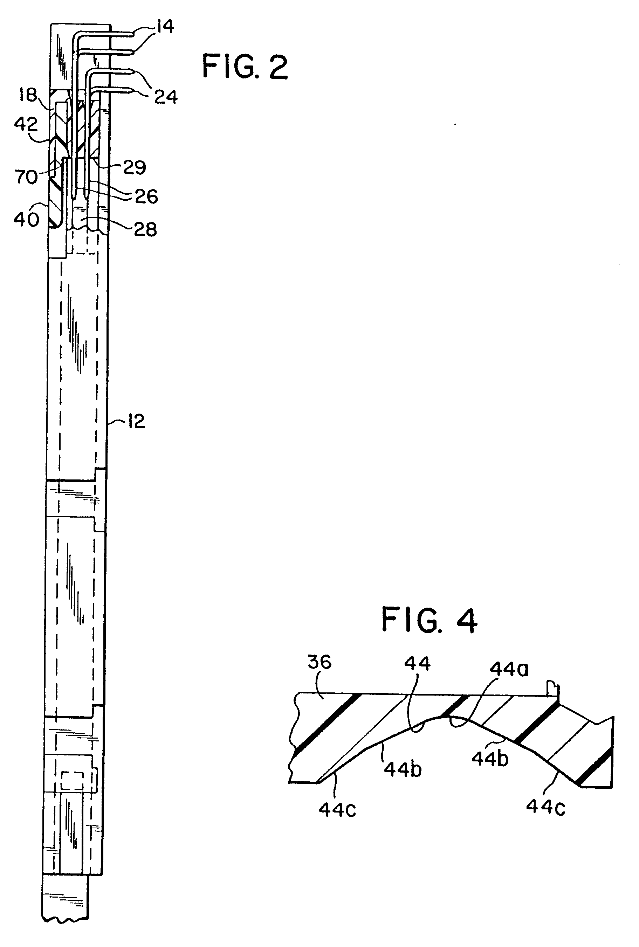

The connector 10 generally comprises a frame 12, electrical contacts 14, (see Fig 2) and an ejector or ejection mechanism 16. The frame 12 forms a housing for the electrical contacts 14. The frame 12 is preferably made of dielectric material with a header section 18 and two spaced side arms 20, 21. The header section 18 has holes 22 for mounting the frame 12 to a member, such as a printed circuit board (not shown). The contacts 14 are fixedly mounted in the header section 18 with first ends 24 for connection to the printed circuit board and second ends 26 for connection to an electronic module, such as a PCMCIA module or card. PCMCIA cards are well known in the art as disclosed in copending U.S. patent application No. 08/144,835 which is hereby incorporated by reference in its entirety. The header section 18 establishes a receiving area 28 that a portion of the PCMCIA card can be inserted into with the second ends 26 of the contacts 14 being connected to contacts in the PCMCIA card. Thus, the connector 10, in the embodiment shown, is a PCMCIA electrical connector. However, in alternate embodiments, features of the present invention could be incorporated into connectors for receiving electronic modules other than PCMCIA modules.

The side arms 20, 21 each have an interior facing groove 30 that slidingly receives a portion of the PCMCIA card to insert the card into the header section 18. The exteriors of the two side arms 20, 21 each have dovetail recesses 32. Both side arms 20, 21 also have a notch 34 on its top side proximate the header section 18. The side arms 20, 21 are integrally formed with the header section 18. However, in alternate embodiments, the side arms could be separate members attached to the header section.

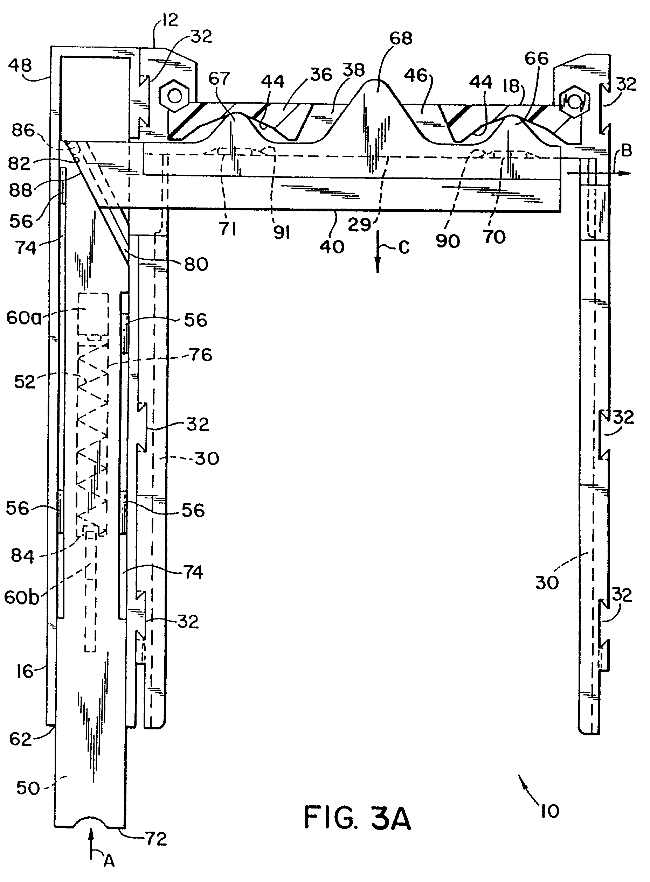

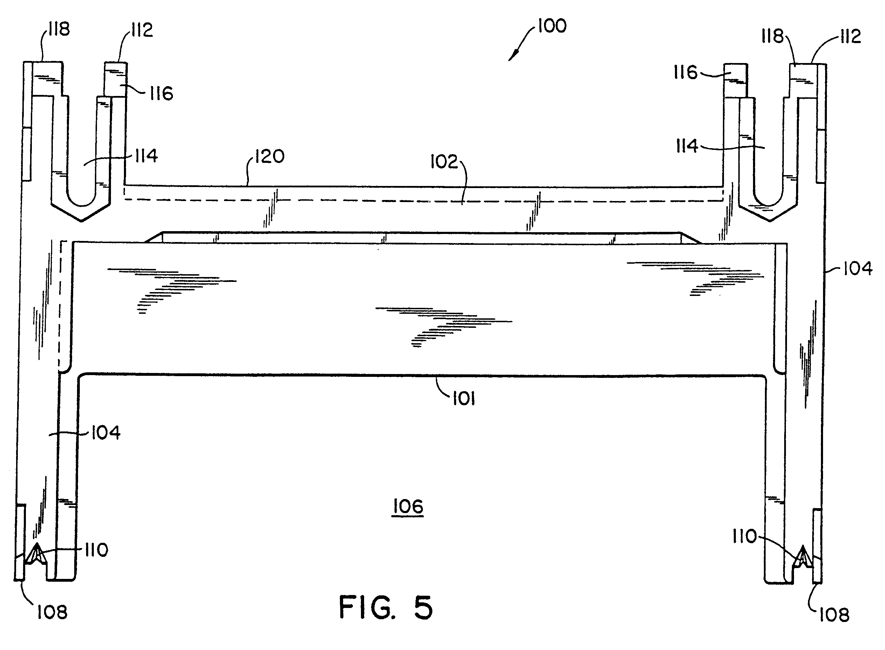

The header section 18 also has a cam section 36 located above the contacts 14. As seen best in Fig. 3A, which is a sectional view through the cam section 36, the frame 12 has a slot 38 for movably receiving an ejector member 40. Section 42 of the frame 12 (see Fig. 1) forms a top over the slot 38. The cam section 36 has two spaced substantially identical cam surfaces 44 separated by a passage 46 of the slot 38 through the frame to the rear of the header section 18. In an alternate embodiment, one cam surface could be provided or more than two cam surfaces could be provided. Fig. 4 shows an enlarged view of one of the cam surfaces 44. In the embodiment shown, the cam surface 44 has multiple cam surface slopes. In particular, the cam surface 44 has a first curved surface 44a at its center and, a second flat surface 44b and a third flat surface 44c on both sides of the first curved surface 44a. As can be seen, the slopes of the third flat surfaces 44c are steeper than the slopes of the second flat surfaces 44b. In alternate embodiments, other types of shapes or configurations could be provided including curved surfaces. In the embodiment shown, the cam section 36 and section 42 are integrally formed as part of the frame 12. However, in alternate embodiments, the cam section and/or section 42 could be separate members that are stationarily attached to the header section 18.

The ejection mechanism 16 generally comprises an ejector housing 48, ejector member 40, control member 50, and a spring 52. The ejector housing 48 includes dovetail projections 54, mounting latches 56, side slot 58, spring mounts 60a, 60b and an open front end 62. The ejector member 40 includes a first end 64, two cam projections 66, 67, a stabilizing projection 68, and module contacting surfaces 70, 71. The control member 50 includes a finger contact end 72, side recesses 74, bottom recess 76, and a wedge end 78. The wedge end 78 includes a groove 80 and a wedge surface 82.

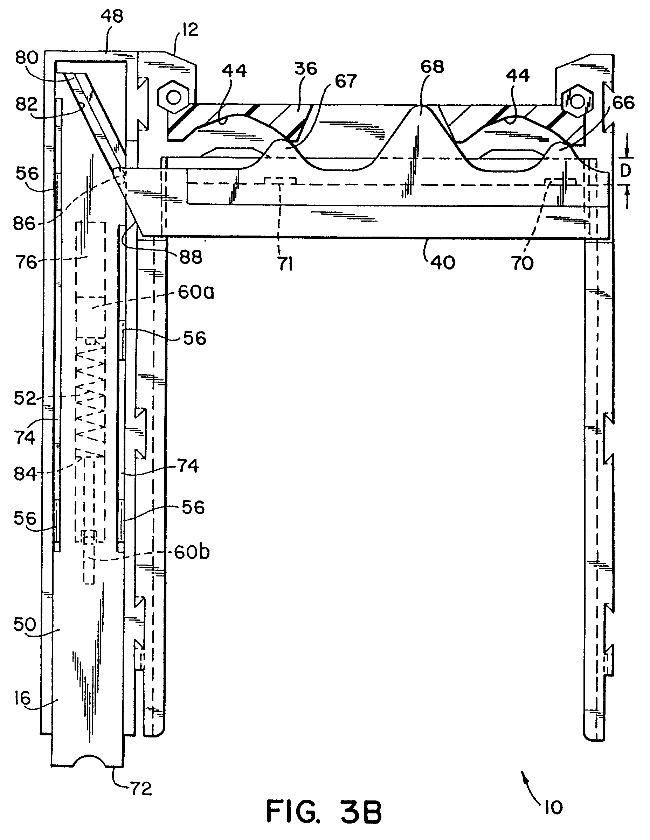

The spring 52 is a coil spring that is mounted to the ejector housing 48 between the two spring mounts 60a and 60b. In an alternate embodiment, the spring 52 need not be provided. The control member 50 is longitudinally slidably mounted to the ejector housing 48. The spring 52 and spring mounts 60a,60b are located in the bottom recess 76 of the control member 50. As seen in comparing Fig. 3A to Fig. 3B, the spring 52 can be compressed between surface 84 in the recess 76 and spring mount 60a as the control member 50 is moved from the first position in the ejector housing 48 shown in Fig. 3A to the second position in the ejector housing 48 shown in Fig. 3B. The mounting latches 56 of the ejector housing 48 are slidingly received in the side recesses 74 of the control member 50. The latches 56 and side recesses 74 allow the control member 50 to be snap-lock mounted to the ejector housing 48, but nonetheless allow the control member 50 to be longitudinally slidable in the ejector housing 48.

The dovetail projections 54 of the ejector housing 48, in the embodiment shown, are fixedly mounted to the left side arm 20 of the frame 12 in the dovetail recesses 32. Any suitable means could be used to fix the projections 54 in recesses 32 including a snap-lock mounting, press-fit mounting, or adhesive. The dovetail recesses 32 on the right side arm 21 are provided such that a different ejection mechanism, substantially a mirror image to the ejection mechanism 16, could be mounted to the right side of the frame 12. Thus, the frame 11 is adapted to be configured with an ejection mechanism mounted to either its right side or left side. Therefore, the same frame 12 can be used in different configured connectors for devices, such as laptop computers, that have different connector configuration requirements.

The ejector member 40 has a pin 86 projecting downward from its first end 64. The pin 86 is slidingly located in groove 80 of the control member 50. The first end 64 also has a wedge surface 88. The wedge surface 88 is in slidable contact with the wedge surface 82 of the control member 50. The ejector member 40 projects into the ejector housing 48 at the side slot 58. The cam projections 66, 67 and stabilizing projection 68 of the ejector member 40 are located in the slot 38 of the frame 12 under the top section 42.

Fig. 3A shows the connector 10 with the ejection mechanism 16 at a first non-ejecting home position. In this home position, the spring 52 biases the control member 50 such that its finger contact end 72 is in an extended position out the open front end 62 of the ejector housing 48. Because the pin 86 is located in groove 80 and wedge surface 88 is slidingly located against wedge surface 82, the ejector member 40 is orthogonally connected to the control member 50. Because of this connection, the two members 40, 50 can side relative to each other, but still retain their orthogonal relationship to each other. The two cam projections 66, 67 are located against the center 44a of the two cam surfaces 44. The stabilizing projection 68 extends out the rear of the passage 46. The control surfaces 70, 71 are recessed in pockets 90,91 of the frame 12, (see also Fig.2) flush with the stop surface 29 of the receiving area 28. In this home position, a PCMCIA module can be inserted into the connector 10 and properly connected with the second ends 26 of the contacts 14. Part of the housing of the PCMCIA module is received in the receiving area 28 adjacent the stop surface 29 and contact surfaces 70, 71. When a user desires to eject the PCMCIA module, the user pushes on the finger contact end 72 in the direction A illustrated in Fig. 3A.

Referring to both Figs. 3A and 3B, Fig. 3B shows the connector 10 with the ejection mechanism 16 in a second ejecting position. As can be seen in comparing these two figures, when the user pushes on finger contact end 72, the control member 50 is longitudinally slid in the ejector housing 48 in the direction A. As the control member 50 is moved, the spring 52 is compressed between surface 84 and spring mount 60a. Because the ejector member 40 is retained in an orthogonal orientation relative to the control member 50, and contacts the frame 12 at cam section 36, as the control member 50 is moved, the wedge surfaces 82, 88 cooperate to move the ejector member 40 in direction B; orthogonal to direction A. However, because of the slopes of the cam surfaces 44, as the ejector member 40 is moved in direction B, it is also moved in direction C; orthogonal to direction B and reverse to direction A. This results in the module contact surfaces 70, 71 moving an ejection distance D in the direction C from their original home positions. In a preferred embodiment, the distance D is about 0.2 inch. However, any suitable ejection distance could be provided. Because the contact surfaces 70, 71 would be adjacent the front of a PCMCIA module adjacent the stop surface 29 at the home position, as the contact surfaces 70, 71 move to their position shown in Fig. 3B, they push against the front of the PCMCIA module.
This pushes the module out of direct electrical and mechanical contact with the contacts 14. Because the mechanical contact of the PCMCIA module with the contacts 14 is a substantial portion of the mechanical connection of the module to the connector 10, after ejection, the module can be easily slide out of the connector 10.

In the embodiment shown, the ejection mechanism 16 provides an ejection force on the module that varies as the module is moved the distance D. This is due to the different slopes provided at the cam surfaces 44 and, the shape of the cam projections 66, 67. As noted above, the cam surfaces 44 have three different surfaces 44a, 44b, 44c. The cam projections 66, 67 have a parabolic-like shape. When the ejector member 40 moves from the position shown in Fig. 3A to the position shown in Fig. 3B, the cam projections 66, 67 contact the cam surfaces 44 along different slopes of the parabolic-like shape. The different slopes of the surfaces 44a, 44b, 44c and the varying slope of the parabolic-like shape of the cam projections 66, 67 combine to function as compound cam surfaces. The compound cam surfaces combine to vary the ejection force on the module (assuming a constant input force at the finger contact end 72 of the control member 50). In a preferred embodiment, with a constant 1 pound input force at the finger contact end 72, the ejection system 16 will exert about 13 pounds of ejection force on a module for the first 0.005 inch of travel in direction C. This initial high force is necessary to overcome inertial frictional forces between the module and the contacts 14. The ejection system 16 will exert about 8.5 pounds of ejection force for the next 0.01 inch of travel in direction C. The ejection system 16 will exert about 3.5 pounds of ejection force for the next 0.06 inch of travel in direction C. The ejection system 16 will exert about 2 pounds of ejection force in the last travel in direction C.

When ejection of the module is completed, the user releases the control member 50. The spring 52 biases the control member 50 back to its original position shown in Fig. 3A. As the control member 50 is moved, the ejection member 40 is also moved back to its position shown in Fig. 3A. This is caused by the pin 86 being located in groove 80 and the ejector member 40 being orthogonally connected to the control member 50. The module or a new module can now be inserted into the connector 10 at any time. The mirror shape of each side of each cam surface 44 is provided such that the frame 12 can be used in an identical, but reverse fashion with an ejection mechanism mounted on the right side of the frame 12. The stabilizing projection 68 is provided to keep the ejector member 40 stably mounted on the frame 12 even when the ejection member 40 is in its full forward position shown in Fig. 3B.

Referring to Fig. 5, an alternate embodiment of the present invention will now be described. The header 100 has pin contacts (not shown) and a housing 101. The housing 101 is generally comprised of dielectric material such as a molded Plastic or polymer material. The housing 101 has a center section 102 and two side sections 104. Mounted to the center section 102 are the pin contacts (not shown). Open area 106 is established between the two side sections 104 to receive a portion of an electronic package or card, such as a PCMCIA card. In the embodiment shown, the front 108 of each of the side sections 104 has a V-shaped groove 110. The rear end 112 of each of the side sections 104 forms a fastener location 114 for fasteners (not shown) to fixedly mount the housing 101 to a printed circuit board. The rear ends 112 also have inner projections 116 and outer projections 118. Similar to the embodiment shown in Fig. 1, the interior sides of the side sections 104 form grooves for the sides of the PCMCIA card. However, the side sections 104 do not have vertically oriented dovetail slots as in the embodiment shown in Fig. 1. The top side of the center section 102, at the rear end of the housing, has a ledge 120. The header 100 is designed to be used with or without an ejection mechanism.

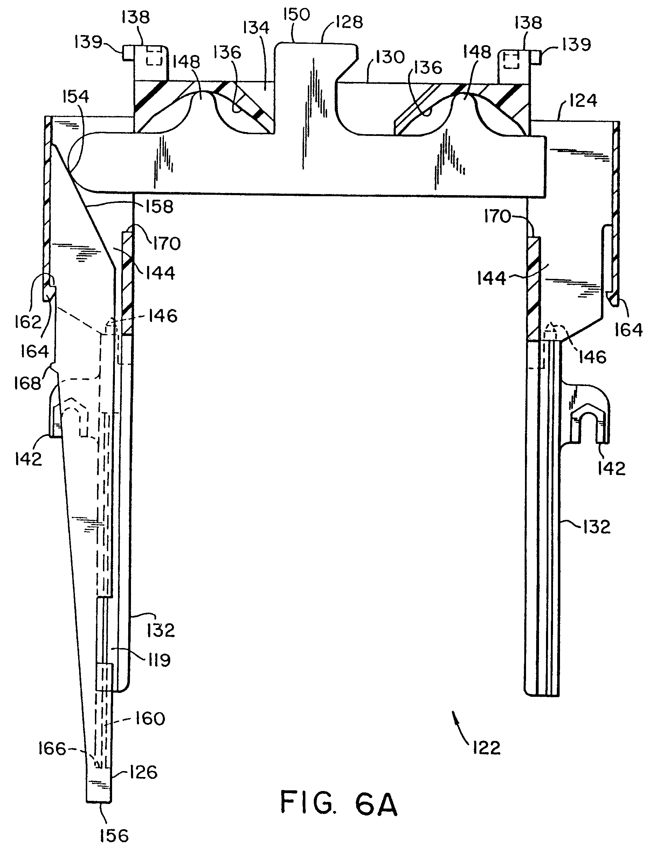

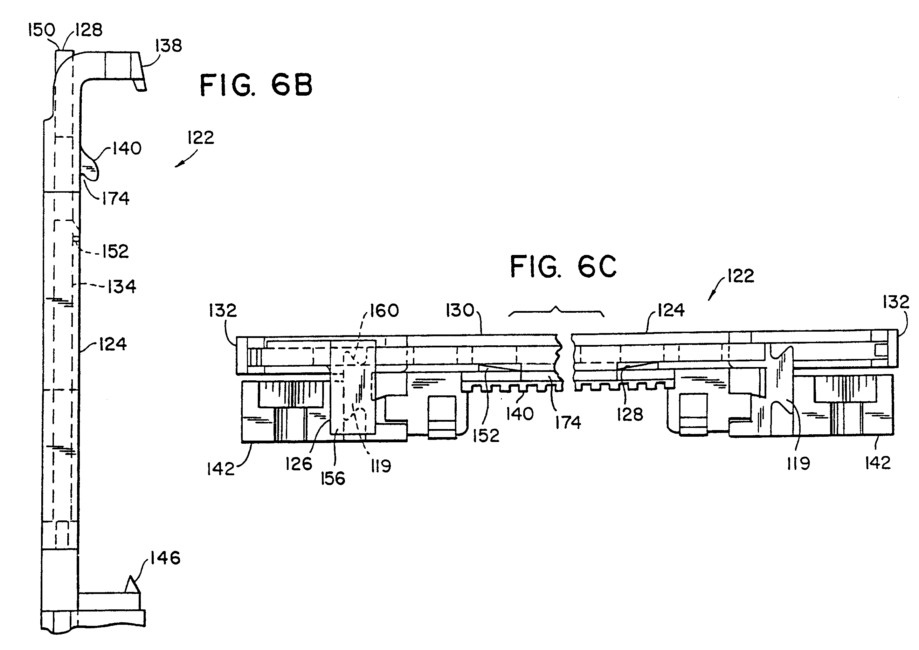

Referring now to Figs. 6A-6C, a module ejector or ejector subassembly 122 is shown for use with the header 100 shown in Fig. 5. The subassembly 122 has a housing 124, an actuator 126, and an ejector member 128. The housing 124, actuator 126 and ejector member 128 are all preferably comprised of a molded dielectrlc material. The housing 124 includes a center section 130 and two side sections 132. The center section 130, which is located at the rear end of the subassembly 122, includes a center slot 134, two cam surfaces 136, two rear mounting extensions 138, and a bottom retainer rail 140. The two side sections 132 are mirror images of each other. Each side section 132 has a fastener mounting section 142, a side pocket 144 intersecting with the center slot 134, and a bottom latch 146. The fastener mounting sections 142 are used to fixedly attach the subassembly housing 124 to the printed circuit board by means of fasteners (not shown).

The ejector member 128 is slidably mounted in the center slot 134. Similar to the ejector member 40 shown in Fig. 1, the ejector member 128 has two cam projections 148, a stabilizing projection 150, a module contact surface 152, and an actuator contact surface 154. The two cam projections 148 operably interact with the two cam surfaces 136. The module contact surface 152 is adapted to engage a portion of a PCMCIA card to push the card similar to surface 70 in Fig. 2. The ejector member 128 is cammed forward when it is pushed sideways by the actuator 126.

The actuator 126 has a front finger contact section 156, a rear end ejector member contact surface 158, and a side mounting slot 160. The surface 158 is wedge shaped to laterally move the ejector member 128 when the actuator 126 is depressed. The side mounting slot 160 has a general dovetail shape. The actuator 126 is slidably mounted on the housing 124 on the left side with the dovetail projection 119 located in the dovetail slot 160. Because the opposite right side also has a dovetail projection 119, the housing 124 could also be used with an actuator mounted on its right side rather than its left side. The actuator 126 has a first stop surface 162 that interacts with latch 164 of the housing 124 to prevent the inadvertent disconnection of the actuator 126 from the housing 124. The end 166 of the dovetail slot 160 at finger contact section 156 prevents the actuator 126 from being pushed too far into the side pocket 144. The exterior side of the actuator 126 also has a raised projection 168. The raised projection 168 is spaced about the same distance from the first stop surface 162 as the actuator 126 is able to be depressed from its unactuated position shown in Fig. 6A. When the actuator 126 is depressed from its position shown in Fig. 6A to its final depressed position or full ejection position, the projection 168 moves past the latch 164. The latch 164 snaps behind the projection 168 when the end 166 of the slot 160 comes into contact with the front of the dovetail projection 119. Thus, when moved to its fully depressed position, the latch 164 and front of projection 119 hold the actuator 126 in place. The ejector member 128, when the actuator 126 has been fully depressed, is held in a stationary position due to its interaction with the actuator surface 158, cam surfaces 136, and forward motion stop surfaces 170. The actuator 126 and ejector member 128 are returned to their unactuated position shown in Fig. 6A only when a PCMCIA card is inserted to move the ejector member 128 rearward. Thus, in this embodiment, no spring is needed.

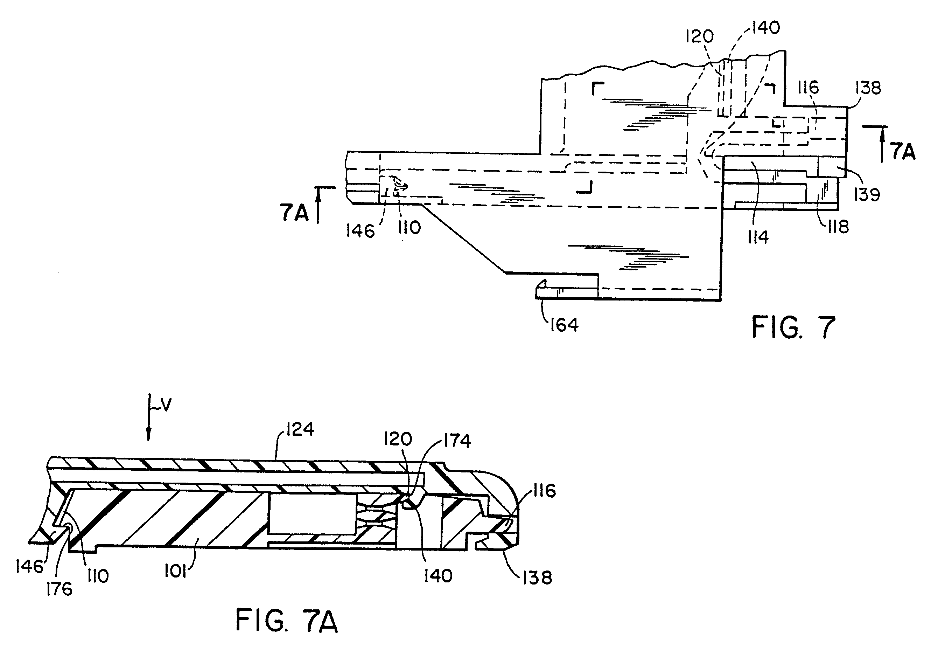

Referring now to Figs. 5, 6A-6C and 7-7A, the assembly of the header 100 with the ejector subassembly 122 will now be described. Each of the ejector subassembly rear mounting extensions 138 are mounted on the housing inner projections 116. The rear extensions 138 of the housing 124 also have side projections 139 that engage the outer projections 118 of the header housing 101 to precisely center the rear end of the subassembly housing 124 on the rear end of the header housing 101. The bottom retainer rail 140 of the subassembly housing 124 receives the ledge 120 of the header housing 101 in the pocket 174 (see Fig. 6B). The pocket 174 has a wedge shape such that the rail 140 pulls the subassembly housing 124 down onto the top of the header 100. The latches 146 on the side sections 132 of the subassembly housing 124 are adapted to snap-lock with the front of the header housing 101 at V-shaped grooves 110. As seen in Fig. 7A, the bottom of the V-shaped grooves 110 have a latch surface 176 that the latches 146 are able to latch behind. The three areas of engagement between the header 100 and ejector subassembly 122 precisely mount the two elements to each other. Because the subassembly 122 can be snap-lock mounted to the header 100 in a vertical direction V (or Z-direction), the subassembly 122 can be mounted to the header 100 after the header 100 has been mounted to a printed circuit board. Assembly of a header to a printed circuit board, without an ejection mechanism attached to it, can reduce the number of problems that could otherwise arise. Once the subassembly 122 is snap-lock mounted to the header 100, fasteners (not shown) can fixedly attach the subassembly 122 to the printed circuit board at fastener mounting sections 142.

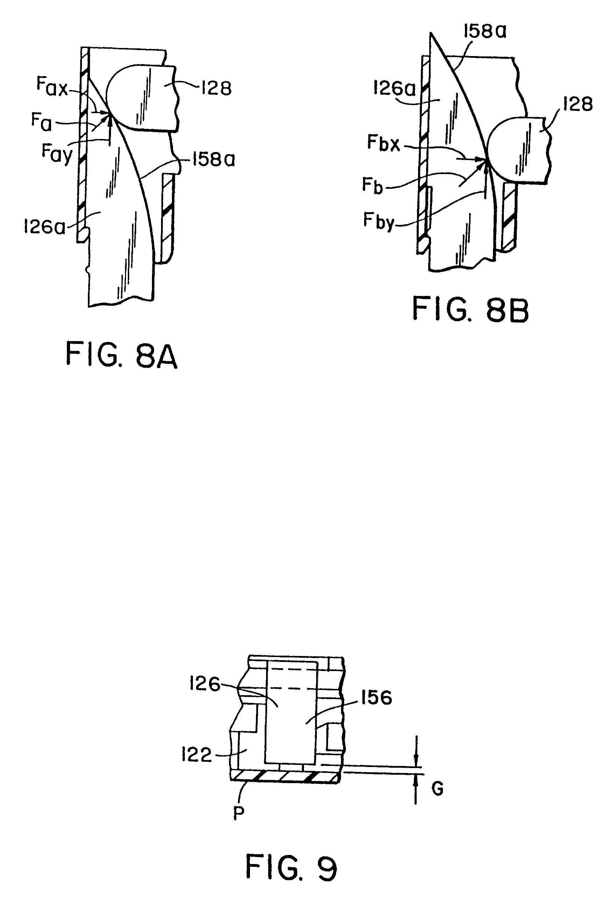

Referring now to Figs. 8A and 8B, a portion of an alternate embodiment of the actuator is shown. The actuator 126a has an ejector member contact surface 158a with a caternary shape. When the actuator 126a is initially depressed from its unactuated position shown in Fig. 8A, the force Fₐ exerted by the actuator 126a against the ejector member 128 has x-direction and y-direction components Fₐₓ and F_{ay}. As the actuator 126a approaches its fully depressed position shown in Fig. 8B, the force F_{b} has x-direction and y-direction components F_{bx} and F_{by}. Because of the caternary shape of surface 158a, the force F_{bx} is greater than the force Fₐₓ. This helps to deliver more effective working force to the ejector member 128 at the final ejection stage of the ejection of a PCMCIA card.

Referring now to Fig. 9, a portion of the ejector subassembly 122 is shown mounted to the printed circuit board P. A front elevational view of the finger contact surface 156 of the actuator 126 is shown. As seen, there is a gap G provided between the top of the printed circuit board P and the bottom of the actuator 126. This gap G, caused by the elevated location of the actuator 126 above the top surface of the board P, allows the area under the actuator 126 to now be available for circuit pathways on the board P. Thus, the present invention has a reduced footprint on the board P. Another feature of the separate ejector subassembly and header embodiment described above is that all of the cam surfaces are in the ejector subassembly. Therefore, if the header is used alone, there is less added weight than if the header housing had the cam surfaces.

It should be understood that the foregoing description is only illustrative of the invention. Various alternatives and modifications can be devised by those skilled in the art without departing from the spirit of the invention. Accordingly, the present invention is intended to embrace all such alternatives, modifications and variances which fall within the scope of the appended claims.

## Claims

1. An electrical connector (10) for an electronic module, the connector comprising:
a header section (18) having a housing (12) and electrical contacts (14); and
a module ejector (16) mounted to the housing (12), the ejector (16) having a first longitudinal control member and a second longitudinal ejector member, the first and second members being slidably connected to each other in a general orthogonal fashion, wherein longitudinal movement of the first member in a first direction longitudinally moves the second member in a second direction orthogonal to the first direction.

2. A connector as in Claim 1 further comprising means for moving the second member in a third direction, reverse to the first direction, when the second member is moved in the second direction.

3. A connector as in Claim 2 wherein the means for moving comprises the housing (12) having a stationary cam surface (44) that moves the second member in the third direction when the second member is moved in the second direction.

4. A connector as in claim 3 wherein the cam surface (44) has a first portion with a first cam slope and a second portion with a second cam slope.

5. A connector as in Claim 1 wherein the housing (12) includes an integral cam surface for moving the second member in a third direction.

6. A connector as in Claim 1 further comprising means for varying ejection force exerted by the second member on an electronic module being ejected.

7. A connector as in Claim 6 wherein the means for varying ejection force varies ejection force based upon the position of the second member relative to the housing (12).

8. A connector as in Claim 6 wherein the ejection force decreases as an ejection module is being ejected.

9. A connector as in Claim 3 wherein the housing has a cam surface (44) for stably moving the second member in the third direction.

10. A electrical connector for an electronic module, the connector comprising:
a header section having a frame and electrical contacts; and
an ejector mechanism (128) mounted to the frame, the ejector mechanism having a longitudinally slidable ejector member with a contact surface for contacting and pushing on an electronic module inserted into the header;
wherein the header has a first cam surface (136) contacting the ejector member (128), the first cam surface (136) and ejector member (128) being suitably shaped such that, upon longitudinal movement of the ejector member (128) in one direction, the first cam surface moves the entire ejector member (128) in another orthogonal direction.

11. A connector as in Claim 10 wherein the first cam surface (136) is integrally formed on the frame.

12. A connector as in Claim 10 wherein the first cam surface (136) has at least two different cam slopes.

13. A connector as in Claim 10 wherein the ejector member has a second cam surface that contacts the first cam surface (136), the second cam surface having at least two cam slopes.

14. A connector as in Claim 10 wherein the first cam surface (136) is bi-directional such that the header and first cam surface can be used with a different ejector mechanism that has a different ejector member that moves in a reverse longitudinal movement.

15. A connector as in Claim 10 wherein the ejector mechanism (128) includes a longitudinally slidable control member connected to the ejector member for longitudinally sliding the ejector member (128) in the one direction.

16. An electrical connector with an ejection system for removably receiving an electronic module, the connector comprising:
a frame (104) having two spaced side arms for slidingly receiving an electronic module therebetween, exteriors of both of the side arms having dovetail mounting recesses;
electrical contacts mounted to the frame (104); and
an ejector mechanism (128) connected to the frame, the ejector mechanism having an ejector housing mounted to the frame along one of the side arms with dovetail projections located in the dovetail recesses.

17. A connector as in Claim 16 wherein the dovetail projections are snap-lock connected to the frame in the dovetail recesses.

18. A connector as in Claim 16 wherein the ejector mechanism includes a control member longitudinally slidingly located in the ejector housing and an ejector member slidingly mounted on the frame orthogonal to the control member.

19. A connector as in Claim 18 wherein the ejector member is movably connected to the control member and, the control member, when moved in a first longitudinal direction, is adapted to move the ejector member in a longitudinal second direction orthogonal to the first direction.

20. A connector as in Claim 19 wherein the frame has a cam surface that is contacted by the ejector member to move the ejector member in a third direction, opposite to the first direction, when the ejector member is moved in the second direction.

21. A method of ejecting an electronic module from an electrical connector comprising steps of:
pushing a first control member of an ejector mechanism of the connector in a first longitudinal direction;
moving a second ejecting member of the ejector mechanism in a second direction orthogonal to the first direction due to contact of the first member with the second member; and
moving the second member in a third direction, reverse to the first direction, as the second member is moved in the second direction.

22. A method as in Claim 21 wherein the step of moving the second member in the third direction includes a frame of the connector having a cam surface, the second member being moved by the cam surface in the third direction as the second member is moved in the second direction.

23. A method as in Claim 21 wherein the step of moving the second member in the third direction includes the second member exerting an ejection force on an electronic module being ejected that varies with the movement of the second member in the third direction.

24. A method as in Claim 23 wherein the ejection force decreases and then increases as the second member approaches a final ejection position.

25. A method of ejecting a PCMCIA electronic module from a PCMCIA electrical connector comprising steps of:
moving an ejecting member from a first position to a second position, the ejecting member having a contact surface for contacting and pushing the PCMCIA electronic module from the PCMCIA electrical connector as the ejecting member is moved from the first position to the second position; and
varying the amount of ejection force exerted by the ejecting member on the PCMCIA electronic module as the ejecting member is moved from the first position to the second position.

26. A method as in Claim 25 wherein the step of varying the amount of ejection force comprises decreasing the ejection force and the increasing the ejection force as the ejecting member is moved from the first position to the second position.

27. An electrical connector with an ejection system for removably receiving a PCMCIA card, the connector comprising:
a header having a receiving area for receiving a PCMCIA card; and
an ejector subassembly snap-lock connected to the header.

28. A connector as in Claim 27 wherein the ejector subassembly has a housing, an ejector member slidingly mounted in the housing, and an actuator slidingly connected to the housing.

29. A connector as in Claim 28 wherein the actuator has a caternary ejector member contact surface.

30. A connector as in Claim 28 wherein the housing has a center section with cam surfaces for moving the ejector member in a first direction when the ejector member is moved by the actuator in a second direction and, side sections, each side section having a guide rail, the actuator being slidingly mounted on one of the guide rails.

31. A connector as in Claim 30 wherein the guide rails have a dovetail shape and, the actuator has a dovetail shaped slot with one of the guide rails located therein.

32. A connector as in Claim 28 wherein the housing has a latch for limiting movement of the actuator.

33. A connector as in Claim 27 wherein the ejector subassembly has a housing with a center section and two side sections, each side section having a latch that is snap-lock latched under a portion of the header.

34. A connector as in Claim 33 wherein the housing has a rear engagement section that interlocks with a rear end of the header.

35. A connector as in Claim 33 wherein the housing has a bottom retaining rail that engages a ledge of the header to mount the housing to the header.
